# FASCICULE DE BREVET EUROPEEN

(11) **EP 4 238 243 B1**
(45) Date de publication et mention de la délivrance du brevet: **23.09.2026**
(21) Numéro de dépôt: 21807188.4
(22) Date de dépôt: 19.10.2021
(51) Int. Cl.: H04B 10/114

(54) **DISPOSITIF DE TRANSMISSION LUMINEUSE D'UN SIGNAL ANALOGIQUE**
VORRICHTUNG ZUR LICHTÜBERTRAGUNG EINES ANALOGEN SIGNALS
DEVICE FOR LIGHT TRANSMISSION OF AN ANALOGUE SIGNAL

(30) Priorité: 28.10.2020 FR 2011048
(43) Date de publication de la demande: 06.09.2023
(73) Titulaire: LIFI, 44800 Saint-Herblain (FR)
(72) Inventeur: THIRIOT, Cyril, 72380 LA-GUIERCHE (FR); BRUN, Lilian, 44110 SAINT-AUBIN-DES-CHATEAUX (FR)
(74) Mandataire: Germain Maureau
(86) Numéro de dépôt international: PCT/FR2021/051824
(87) Numéro de publication internationale: WO 2022/090647

(56) Documents cités:
- EP-A1- 3 462 510
- WO-A1-2017/195062
- US-A- 3 900 404
- US-B1- 10 341 017
- LI HONGLEI ET AL: "An analog modulator for 460 MB/S visible light data transmission based on OOK-NRS modulation", IEEE WIRELESS COMMUNICATIONS, COORDINATED SCIENCE LABORATORY; DEPT. ELECTRICAL AND COMPUTER ENGINEERING; UNIVERSITY OF ILLINOIS AT URBANA-CHAMPAIGN, US, vol. 22, no. 2, 1 April 2015 (2015-04-01), pages 68 - 73, XP011579862, ISSN: 1536-1284, [retrieved on 20150427], DOI: 10.1109/MWC.2015.7096287

## Description

### Art antérieur

De manière connue, le document US20160218807 décrit un système de communication comprenant une source de lumière pour générer de la lumière; une électronique de commande d'émetteur de lumière à large bande pour moduler un signal lumineux et fournir un réseau de transmission de données optique à large bande utilisant la source de lumière; une électronique de commande de récepteur de lumière à large bande pour démoduler un signal lumineux reçu du réseau de transmission de données optique à large bande; et un émetteur-récepteur de réseau câblé couplé à l'émetteur / récepteur de lumière pour recevoir et transmettre des données entre le réseau de transmission de données optique et un circuit câblé.

Toutefois, ces solutions ne donnent pas une entière satisfaction.

En effet, le système de communication du document US20160218807, de par son fonctionnement implique une électronique de commande d'émetteur ayant une forte capacité de calcul ainsi qu'une électronique de commande de réception similaire. De telles électroniques de commande induisent une forte consommation en énergie.

Par ailleurs, le document US10341017 décrit un système de transmission optique d'un signal audio par modulation de l'intensité lumineuse émise par une source de lumière, et comprenant une photodiode couplée à un démodulateur.

La présente invention a pour but de résoudre tout ou partie des inconvénients mentionnés ci-dessus.

La présente invention a également pour but d'apporter une alternative au système de communication décrit dans le document US20160218807.

### Exposé de l'invention

A cet effet, la présente invention concerne un dispositif de transmission lumineuse pour la transmission d'un signal analogique dans une première bande de fréquence inférieure à 20 kHz comprenant :
- une unité de transmission configurée pour transmettre un signal lumineux dans le spectre visible ;
- une unité d'excitation configurée pour générer une excitation, l'excitation étant configurée pour exciter l'unité de transmission ; et
- dans lequel la fréquence ou la durée de l'excitation est déterminée en fonction d'une valeur du signal analogique, la fréquence d'excitation étant comprise dans une seconde bande de fréquence supérieure à 1 MHz.

Selon l'invention l'unité d'excitation est configurée pour exciter l'unité de transmission lorsque ladite unité de transmission est dans un régime transitoire descendant ou dans un régime stable dans lequel l'intensité lumineuse est nulle.

Une telle disposition, et plus spécifiquement une fréquence d'excitation comprise dans une seconde bande de fréquence supérieure à 1 MHz permet d'assurer un éclairage acceptable pour l'œil humain. Au sens de la présente invention, le terme acceptable pour l'œil humain signifie ayant une fréquence assez élevée pour que l'œil humain ne discerne pas de clignotement.

Selon un mode de réalisation, la fréquence d'excitation est égale à 2 MHz. Une telle fréquence d'excitation permet d'obtenir un signal analogique de meilleure qualité sans pour autant nécessiter une unité d'excitation performante et donc consommant plus d'énergie. En effet, plus la fréquence d'excitation est élevée et plus le signal lumineux émis varie avec précision.

Une telle disposition permet la transmission d'un signal lumineux ayant une intensité variable et permet ainsi la transmission d'un signal lumineux analogique.

Au sens de la présente invention, le spectre visible comprend les ondes électromagnétiques ayant une longueur d'onde comprise entre 380nm et 780nm.

Selon un mode de réalisation, une telle disposition permet d'utiliser une unité de transmission déjà existante dans une réseau d'éclairage par exemple. Une telle disposition est donc écologiquement économe.

Une telle disposition permet d'obtenir la transmission d'un signal analogique par la lumière sans nécessiter de guide telle qu'une fibre optique par exemple.

Selon un mode de réalisation, l'unité de transmission comprend une diode électroluminescente phosphorescente. Selon un mode de réalisation préféré, la diode électroluminescente phosphorescente est une diode électroluminescente phosphorescente blanche.

Une telle disposition permet d'obtenir une unité de transmission capable d'émettre de la lumière entre deux excitations pendant un temps plus long qu'une ampoule incandescente par exemple.

Selon la présente invention, l'unité d'excitation est configurée pour exciter l'unité de transmission lorsque ladite unité de transmission est dans un régime transitoire descendant ou dans un régime stable dans lequel l'intensité lumineuse est nulle.

Au sens de la présente invention, un régime transitoire descendant est un régime transitoire dans lequel l'intensité de la lumière émise par l'unité d'émission est décroissante. Un tel régime transitoire est obtenu entre deux excitations.

Selon un mode de réalisation, le dispositif de transmission lumineuse comprend une première unité de communication configurée pour communiquer avec une deuxième unité de communication déportée selon un protocole de communication électromagnétique.

Au sens de la présente invention, un signal électromagnétique est un signal radio.

Une telle disposition permet au dispositif de transmission de transmettre des données à l'aide d'un signal lumineux analogique mais également de recevoir des données à l'aide d'un signal électromagnétique.

Selon un mode de réalisation, la première unité de communication est configurée pour communiquer selon l'un quelconque des protocoles de communications électromagnétiques tels que le « RFID », le « Bluetooth » ou encore le « BLE » par exemple.

L'invention concerne également un dispositif de réception lumineuse configuré pour générer un signal analogique de sortie comprenant :
- une unité de réception présentant un temps de latence inférieur à 1µs configurée pour recevoir un signal lumineux émis par une unité de transmission lumineuse ;
- une unité de mesure d'intensité configurée pour mesurer une intensité du signal lumineux reçu par l'unité de réception et pour générer un signal analogique de sortie dans une première bande de fréquence inférieure à 20 kHz.

Selon l'invention, le signal lumineux est généré en excitant l'unité de transmission lorsque l'intensité de la lumière émise par l'unité de transmission est nulle ou décroissante, l'unité de réception comprenant une cellule photovoltaïque.

Une telle disposition permet d'obtenir un signal analogique transmis par la lumière.

Une unité de réception présentant un temps de latence inférieur à 1µs permet de recevoir un signal lumineux émis par une unité de transmission excitée par une unité d'excitation à une fréquence supérieure à 1MHz.

Une telle disposition, et plus spécifiquement le caractère phosphorescent de la diode couplé à la latence de la cellule photovoltaïque permet un lissage du signal analogique généré en sortie, et cela sans nécessiter de démodulation.

Selon un mode de réalisation, une telle disposition permet d'obtenir une unité de réception énergétiquement passive, voir même génératrice d'énergie.

Selon un mode de réalisation, la cellule photovoltaïque est une cellule photovoltaïque organique dite OPV.

Selon un mode de réalisation, une telle disposition permet d'obtenir un fort gain de réception et ainsi obtenir une bonne qualité de réception même lorsque l'intensité du signal lumineux reçu est très inférieure à l'intensité de la lumière ambiante. A titre d'exemple, le dispositif selon l'invention est capable de recevoir un signal de 40 LUX dans une lumière ambiante de plus de 10 000 LUX.

Selon un mode de réalisation, le dispositif de réception comprend une deuxième unité de communication configurée pour communiquer avec une première unité de communication déportée selon un protocole de communication électromagnétique.

Une telle disposition permet au dispositif de réception de recevoir des données à l'aide d'un signal lumineux analogique mais également de transmettre des données à l'aide d'un signal électromagnétique.

Selon un mode de réalisation, la deuxième unité de communication est configurée pour communiquer selon l'un quelconque des protocoles de communications électromagnétiques tels que le « RFID », le « Bluetooth » ou encore le « BLE » par exemple.

L'invention concerne également un ensemble de transmission d'un signal analogique comprenant :
- un dispositif de transmission lumineuse pour la transmission d'un signal analogique dans une première bande de fréquence inférieure à 20 kHz comprenant :
- une unité de transmission configurée pour transmettre un signal lumineux dans le spectre visible,
- une unité d'excitation configurée pour exciter l'unité de transmission :
- dans lequel la fréquence ou la durée d'excitation est déterminée en fonction d'une valeur du signal analogique, la fréquence d'excitation émise étant comprise dans une seconde bande de fréquence supérieure à 1 MHz ;
- un dispositif de réception lumineuse configuré pour générer un signal analogique de sortie comprenant :
- une unité de réception présentant un temps de latence inférieur à 1µs configurée pour recevoir le signal lumineux émis par le dispositif de transmission lumineuse ;
- une unité de mesure d'intensité configurée pour mesurer une intensité du signal lumineux reçu par l'unité de réception et pour générer un signal analogique de sortie dans la première bande de fréquence.

Selon l'invention, le signal lumineux est généré en excitant l'unité de transmission lorsque l'intensité de la lumière émise par l'unité de transmission est nulle ou décroissante.

L'invention concerne également un procédé de transmission d'un signal analogique dans une première bande de fréquence inférieure à 20 kHz comprenant les étapes suivantes :
- excitation d'une unité de transmission configurée pour transmettre un signal lumineux dans le spectre visible, dans laquelle la fréquence ou la durée d'excitation est déterminée en fonction d'une valeur du signal analogique, la fréquence d'excitation étant comprise dans une seconde bande de fréquence supérieure à 1 MHz;
- émission d'un signal lumineux par l'unité de transmission excitée ;
- réception d'un signal lumineux par une unité de réception ;
- mesure de l'intensité du signal lumineux reçu par l'unité de réception à l'aide d'une unité de mesure d'intensité et pour générer un signal analogique de sortie dans la première bande de fréquence, dans laquelle l'unité de réception présente un temps de latence inférieur à 1µs.

Selon l'invention, le signal lumineux est généré en excitant l'unité de transmission lorsque l'intensité de la lumière émise par l'unité de transmission est nulle ou décroissante.

Les différents aspects définis ci-dessus non incompatibles peuvent être combinés.

### Brève description des figures

L'invention sera encore mieux comprise à l'aide de la description détaillée qui est exposée ci-dessous en regard des dessins annexés dans lesquels :
- la figure 1 représente une vue schématique d'un ensemble de transmission d'un signal analogique comprenant un dispositif de transmission lumineuse et un dispositif de réception lumineuse conformément à la présente invention ;
- la figure 2 représente un premier exemple d'un régime stable ainsi qu'un régime transitoire conformément à la présente invention ;
- la figure 3 représente un deuxième exemple d'un régime stable ainsi qu'un régime transitoire conformément à la présente invention ; et
- la figure 4 représente l'intensité d'un signal analogique lumineux en fonction du temps, le signal analogique étant transmis par un dispositif de transmission lumineuse conformément à la présente invention.

### Description en référence aux figures

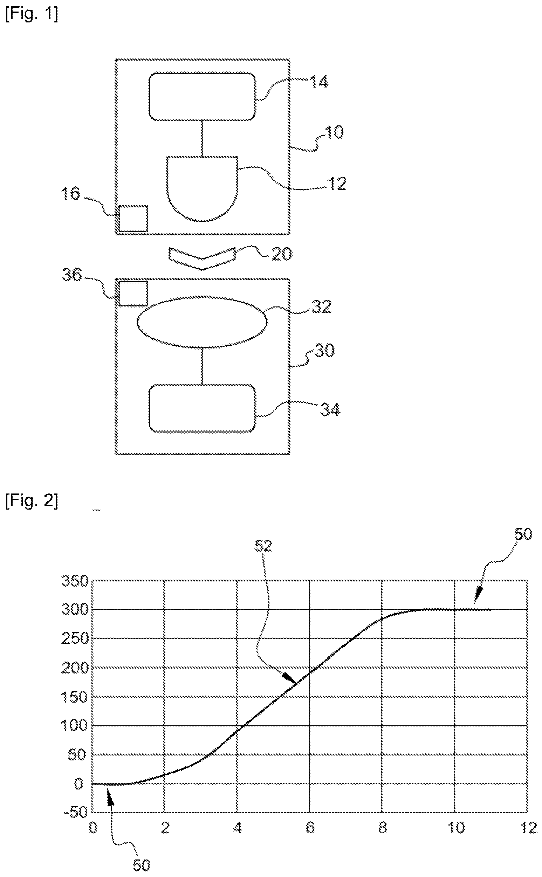

La figure 1 représente un ensemble de transmission d'un signal analogique 11 comprenant un dispositif de transmission lumineuse 10 et un dispositif de réception lumineuse 30.

Le dispositif de transmission lumineuse 10 est configuré pour la transmission d'un signal analogique 11 dans une première bande de fréquence inférieure à 20 kHz et comprend une unité de transmission 12 configurée pour transmettre un signal lumineux 20 dans le spectre visible. Au sens de la présente invention, le spectre visible comprend les ondes électromagnétiques ayant une longueur d'onde comprise entre 380nm et 780nm. Selon un mode de réalisation, une telle disposition permet d'utiliser une unité de transmission 12 déjà existante dans une réseau d'éclairage par exemple. Une telle disposition est donc écologiquement économe.

L'unité de transmission 12 comprend une diode électroluminescente phosphorescente, ce qui permet d'obtenir une unité de transmission 12 capable d'émettre de la lumière entre deux excitations 13 pendant un temps plus long qu'une ampoule incandescente par exemple.

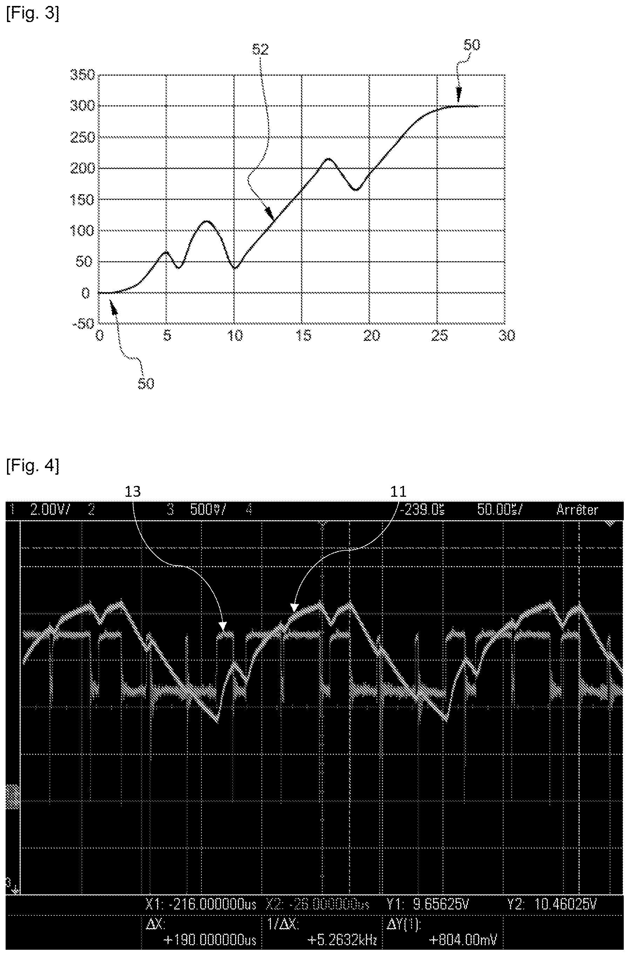

Le dispositif de transmission lumineuse 10 comprend également une unité d'excitation 14 configurée pour exciter l'unité de transmission 12. Une telle disposition permet la transmission d'un signal lumineux ayant une intensité variable et permet ainsi la transmission d'un signal lumineux analogique tel que représenté sur la figure 4. Au sens de la présente invention, une excitation 13 est un signal électrique envoyé à l'unité de transmission 12. La fréquence de l'excitation correspond au nombre d'excitations 13 envoyées pendant un temps donné.

La fréquence ou la durée d'excitation est déterminée en fonction d'une valeur du signal analogique 11, la fréquence d'excitation étant comprise dans une seconde bande de fréquence supérieure à 1 MHz. Une telle disposition, et plus spécifiquement une fréquence d'excitation comprise dans une seconde bande de fréquence supérieure à 1 MHz permet d'assurer un éclairage acceptable pour l'œil humain. Au sens de la présente invention, le terme acceptable pour l'œil humain signifie ayant une fréquence assez élevée pour que l'œil humain ne discerne pas de clignotement.

Selon un mode de réalisation, la fréquence d'excitation est constante et de préférence égale à 2 MHz. Une telle fréquence d'excitation permet d'obtenir un signal analogique de meilleure qualité sans pour autant nécessiter une unité d'excitation 14 performante et donc consommant plus d'énergie. En effet, plus la fréquence d'excitation est élevée et plus le signal lumineux émis varie avec précision. La génération du signal analogique 11 lumineux est alors possible en modifiant la durée de chaque excitation 13 tel que représenté à la figure 4. En jouant sur le rapport cyclique, il est donc possible d'obtenir un signal analogique 11 précis. Une telle disposition permet également d'éviter tout effet stroboscopique ou de clignotement que pourrait créer l'unité de transmission 12. En effet, avec une fréquence d'excitation constante, l'impédance de l'unité de transmission 12, qui est une diode électroluminescente, reste constante. Les variations d'intensité lumineuse correspondant au signal analogique 11 est donc invisible à l'œil nu. En d'autres termes, l'unité d'excitation 14 réalise une modulation à largeur d'impulsion, l'impulsion correspondant à l'excitation 13.

Selon un mode de réalisation, l'unité d'excitation 14 est configurée pour exciter l'unité de transmission 10 lorsque ladite unité de transmission 12 est dans un régime transitoire 52, par opposition à un régime stable 50, tel que représenté aux figures 2 et 3. Selon un mode de réalisation préféré, l'unité d'excitation 14 est configurée pour exciter l'unité de transmission 10 lorsque ladite unité de transmission 12 est dans un régime transitoire 52 descendant ou dans un régime stable dans lequel l'intensité lumineuse est nulle. Au sens de la présente invention, un régime transitoire 52 descendant est un régime transitoire dans lequel l'intensité de la lumière émise par l'unité d'émission 12 est décroissante. Un tel régime transitoire est obtenu entre deux excitations 13.

Le dispositif de réception lumineuse 30 est configuré pour générer un signal analogique 11 de sortie et comprend une unité de réception 32 présentant un temps de latence inférieur à 1µs. L'unité de réception 32 est configurée pour recevoir le signal lumineux 20 émis par le dispositif de transmission lumineuse 10. Une unité de réception 32 présentant un temps de latence inférieur à 1µs permet de recevoir un signal lumineux émis par une unité de transmission 12 excitée par une unité d'excitation 14 à une fréquence supérieure à 1MHz.

L'unité de réception 32 comprend une cellule photovoltaïque organique. Une telle disposition, et plus spécifiquement le caractère phosphorescent de la diode couplé à la latence de la cellule photovoltaïque permet un lissage du signal analogique 11 généré en sortie, et cela sans nécessiter de démodulation. Une telle disposition permet d'obtenir une unité de réception 32 énergétiquement passive, voir même génératrice d'énergie. Selon un mode de réalisation, une cellule organique permet d'obtenir un fort gain de réception et ainsi obtenir une bonne qualité de réception même lorsque l'intensité du signal lumineux reçu est très inférieure à l'intensité de la lumière ambiante. A titre d'exemple, le dispositif selon l'invention est capable de recevoir un signal de 40 LUX dans une lumière ambiante de plus de 10 000 LUX.

Le dispositif de réception lumineuse 30 comprend également une unité de mesure d'intensité 34 configurée pour mesurer une intensité du signal lumineux 20 reçu par l'unité de réception 32 et pour générer un signal analogique 11 de sortie dans la première bande de fréquence inférieure à 20 kHz.

Selon un mode de réalisation, le dispositif de transmission lumineuse 10 comprend une première unité de communication 16 configurée pour communiquer avec une deuxième unité de communication 36. La deuxième unité de communication 36 est comprise dans le dispositif de réception lumineuse 30. La première unité de communication 16 et la deuxième unité de communication 36 communiquent entre l'une avec l'autre selon un protocole de communication électromagnétique, soit un protocole radio tel que le « RFID », le « Bluetooth » ou encore le « BLE » par exemple. Une telle disposition permet au dispositif de transmission 10 de transmettre des données à l'aide d'un signal lumineux analogique mais également de recevoir des données à l'aide d'un signal électromagnétique. Réciproquement, une telle disposition permet au dispositif de réception 30 de recevoir des données à l'aide d'un signal lumineux analogique mais également de transmettre des données à l'aide d'un signal électromagnétique.

L'invention concerne également un procédé de transmission d'un signal analogique 11 dans une première bande de fréquence inférieure à 20 kHz comprenant les étapes suivantes :
- excitation d'une unité de transmission 12 configurée pour transmettre un signal lumineux 20 dans le spectre visible, dans laquelle la fréquence ou la durée d'excitation est déterminée en fonction d'une valeur du signal analogique 11, la fréquence d'excitation étant comprise dans une seconde bande de fréquence supérieure à 1 MHz;
- émission d'un signal lumineux 20 par l'unité de transmission 12 excitée ;
- réception d'un signal lumineux 20 par une unité de réception 32;
- mesure de l'intensité du signal lumineux 20 reçu par l'unité de réception 32 à l'aide d'une unité de mesure d'intensité 34 et pour générer un signal analogique 11 de sortie dans la première bande de fréquence, dans laquelle l'unité de réception 32 présente un temps de latence inférieur à 1µs.

Selon un mode de réalisation, le procédé de transmission est exécuté à l'aide du dispositif de transmission lumineuse 10 précédemment décrit. Ainsi, les différentes caractéristiques et modes de réalisation décrits en référence au dispositif de transmission lumineuse 10 s'appliquent également au procédé de transmission.

## Revendications

1. Dispositif de transmission lumineuse (10) pour la transmission d'un signal analogique (11) dans une première bande de fréquence inférieure à 20 kHz comprenant :
• une unité de transmission (12) configurée pour transmettre un signal lumineux (20) dans le spectre visible ;
• une unité d'excitation (14) configurée pour générer une excitation (13), l'excitation (13) étant configurée pour exciter l'unité de transmission (12) ; et
dans lequel la fréquence ou la durée de l'excitation (13) est déterminée en fonction d'une valeur du signal analogique (11), la fréquence d'excitation étant comprise dans une seconde bande de fréquence supérieure à 1 MHz,
**caractérisé en ce que** l'unité d'excitation (14) est configurée pour exciter l'unité de transmission (12) lorsque ladite unité de transmission (12) est dans un régime transitoire descendant ou dans un régime stable dans lequel l'intensité lumineuse est nulle.

2. Dispositif de transmission lumineuse (10) selon la revendication 1, dans lequel l'unité de transmission (12) comprend une diode électroluminescente phosphorescente.

3. Dispositif de transmission lumineuse (10) selon l'une quelconque des revendications 1 et 2,
dans lequel le dispositif de transmission lumineuse (10) comprend une première unité de communication (16) configurée pour communiquer avec une deuxième unité de communication (36) déportée selon un protocole de communication électromagnétique.

4. Dispositif de réception lumineuse (30) configuré pour générer un signal analogique (11) de sortie comprenant :
• une unité de réception (32) présentant un temps de latence inférieur à 1µs configurée pour recevoir un signal lumineux (20) émis par une unité de transmission lumineuse (12) ;
• une unité de mesure d'intensité (34) configurée pour mesurer une intensité du signal lumineux (20) reçu par l'unité de réception (32) et pour générer un signal analogique (11) de sortie dans une première bande de fréquence inférieure à 20 kHz,
**caractérisé en ce que** le signal lumineux (20) est généré en excitant l'unité de transmission (12) lorsque l'intensité de la lumière émise par l'unité de transmission est nulle ou décroissante, l'unité de réception (32) comprenant une cellule photovoltaïque pour recevoir le signal lumineux.

5. Dispositif de réception lumineuse (30) selon la revendication 4, dans lequel la cellule photovoltaïque est une cellule photovoltaïque organique.

6. Dispositif de réception lumineuse (30) selon l'une quelconque des revendications 4 et 5, dans lequel le dispositif de réception (30) comprend une deuxième unité de communication (36) configurée pour communiquer avec une première unité de communication (16) déportée selon un protocole de communication électromagnétique.

7. Ensemble de transmission d'un signal analogique (11) comprenant :
∘ un dispositif de transmission lumineuse (10) pour la transmission d'un signal analogique (11) dans une première bande de fréquence inférieure à 20 kHz comprenant :
• une unité de transmission (12) configurée pour transmettre un signal lumineux (20) dans le spectre visible,
• une unité d'excitation (14) configurée pour exciter l'unité de transmission (12) :
∘ dans lequel la fréquence ou la durée d'excitation est déterminée en fonction d'une valeur du signal analogique (11), la fréquence d'excitation étant comprise dans une seconde bande de fréquence supérieure à 1 MHz et
- un dispositif de réception lumineuse (30) configuré pour générer un signal analogique (11) de sortie comprenant :
• une unité de réception (32) présentant un temps de latence inférieur à 1µs configurée pour recevoir le signal lumineux (20) émis par le dispositif de transmission lumineuse (10) ;
• une unité de mesure d'intensité (34) configurée pour mesurer une intensité du signal lumineux (20) reçu par l'unité de réception (32) et pour générer un signal analogique (11) de sortie dans la première bande de fréquence,
**caractérisé en ce que** le signal lumineux (20) est généré en excitant l'unité de transmission (12) lorsque l'intensité de la lumière émise par l'unité de transmission est nulle ou décroissante.

8. Procédé de transmission d'un signal analogique (11) dans une première bande de fréquence inférieure à 20 kHz comprenant les étapes suivantes :
• excitation d'une unité de transmission (12) configurée pour transmettre un signal lumineux (20) dans le spectre visible, dans laquelle la fréquence ou la durée d'excitation est déterminée en fonction d'une valeur du signal analogique (11), la fréquence d'excitation étant comprise dans une seconde bande de fréquence supérieure à 1 MHz;
• émission d'un signal lumineux (20) par l'unité de transmission (12) excitée ;
• réception d'un signal lumineux (20) par une unité de réception (32) ;
• mesure de l'intensité du signal lumineux (20) reçu par l'unité de réception (32) à l'aide d'une unité de mesure d'intensité (34) et pour générer un signal analogique (11) de sortie dans la première bande de fréquence, dans laquelle l'unité de réception (32) présente un temps de latence inférieur à 1µs.
**caractérisé en ce que** le signal lumineux (20) est généré en excitant l'unité de transmission (12) lorsque l'intensité de la lumière émise par l'unité de transmission est nulle ou décroissante.

## Patentansprüche

1. Lichtübertragungsvorrichtung (10) zum Übertragen eines analogen Signals (11) in einem ersten Frequenzband unter 20 kHz, umfassend:
• eine Übertragungseinheit (12), die konfiguriert ist, um ein Lichtsignal (20) im sichtbaren Spektrum zu übertragen;
• eine Ansteuerungseinheit (14), die konfiguriert ist, um eine Ansteuerung (13) zu generieren, wobei die Ansteuerung (13) konfiguriert ist, um die Übertragungseinheit (12) anzusteuern; und
wobei die Frequenz oder Dauer der Ansteuerung (13) in Abhängigkeit von einem Wert des analogen Signals (11) bestimmt wird, wobei die Ansteuerungsfrequenz in einem zweiten Frequenzband größer als 1 MHz umfasst ist,
**dadurch gekennzeichnet, dass** die Ansteuerungseinheit (14) konfiguriert ist, um die Übertragungseinheit (12) anzusteuern, wenn sich die Übertragungseinheit (12) in einem abfallenden Übergangsbetrieb oder in einem stabilen Betrieb befindet, bei dem die Lichtintensität Null ist.

2. Lichtübertragungsvorrichtung (10) nach Anspruch 1, wobei die Übertragungseinheit (12) eine phosphoreszierende Leuchtdiode umfasst.

3. Lichtübertragungsvorrichtung (10) nach einem der Ansprüche 1 und 2, wobei die Lichtübertragungsvorrichtung (10) eine erste Kommunikationseinheit (16) umfasst, die konfiguriert ist, um mit einer zweiten ausgelagerten Kommunikationseinheit (36) gemäß einem elektromagnetischen Kommunikationsprotokoll zu kommunizieren.

4. Lichtempfangsvorrichtung (30), die konfiguriert ist, um ein analoges Ausgangssignal (11) zu generieren, umfassend:
• eine Empfangseinheit (32), die eine Latenzzeit von weniger als 1 µs aufweist, die konfiguriert ist, um ein von einer Lichtübertragungseinheit (12) ausgegebenes Lichtsignal (20) zu empfangen;
• eine Intensitätsmesseinheit (34), die konfiguriert ist, um eine Intensität des von der Empfangseinheit (32) empfangenen Lichtsignals (20) zu messen und um ein analoges Ausgangssignal (11) in einem ersten Frequenzband unter 20 kHz zu generieren,
**dadurch gekennzeichnet, dass** das Lichtsignal (20) durch Ansteuern der Übertragungseinheit (12) generiert wird, wenn die Intensität des von der Übertragungseinheit ausgegebenen Lichts Null oder abnehmend ist, wobei die Empfangseinheit (32) eine Photovoltaikzelle zum Empfangen des Lichtsignals umfasst.

5. Lichtempfangsvorrichtung (30) nach Anspruch 4, wobei die Photovoltaikzelle eine organische Photovoltaikzelle ist.

6. Lichtempfangsvorrichtung (30) nach einem der Ansprüche 4 und 5, wobei die Empfangsvorrichtung (30) eine zweite Kommunikationseinheit (36) umfasst, die konfiguriert ist, um mit einer ersten ausgelagerten Kommunikationseinheit (16) gemäß einem elektromagnetischen Kommunikationsprotokoll zu kommunizieren.

7. Einheit zum Übertragen eines analogen Signals (11), umfassend:
∘ eine Lichtübertragungsvorrichtung (10) zum Übertragen eines analogen Signals (11) in einem ersten Frequenzband unter 20 kHz, umfassend:
• eine Übertragungseinheit (12), die konfiguriert ist, um ein Lichtsignal (20) im sichtbaren Spektrum zu übertragen,
• eine Ansteuerungseinheit (14), die konfiguriert ist, um die Übertragungseinheit (12) anzusteuern:
∘ wobei die Frequenz oder die Ansteuerungsdauer in Abhängigkeit von einem Wert des analogen Signals (11) bestimmt wird, wobei die Ansteuerungsfrequenz in einem zweiten Frequenzband größer als 1 MHz umfasst ist und
- eine Lichtempfangsvorrichtung (30), die konfiguriert ist, um ein analoges Ausgangssignal (11) zu generieren, umfassend:
• eine Empfangseinheit (32), die eine Latenzzeit von weniger als 1 µs aufweist, die konfiguriert ist, um das von der Lichtübertragungsvorrichtung (10) ausgegebene Lichtsignal (20) zu empfangen;
• eine Intensitätsmesseinheit (34), die konfiguriert ist, um eine Intensität des von der Empfangseinheit (32) empfangenen Lichtsignals (20) zu messen und um ein analoges Ausgangssignal (11) im ersten Frequenzband zu generieren,
**dadurch gekennzeichnet, dass** das Lichtsignal (20) durch Ansteuern der Übertragungseinheit (12) generiert wird, wenn die Intensität des von der Übertragungseinheit ausgegebenen Lichts Null oder abnehmend ist.

8. Verfahren zum Übertragen eines analogen Signals (11) in einem ersten Frequenzband unter 20 kHz, umfassend die folgenden Schritte:
• Ansteuern einer Übertragungseinheit (12), die konfiguriert ist, um ein Lichtsignal (20) im sichtbaren Spektrum zu übertragen, wobei die Frequenz oder die Ansteuerungsdauer in Abhängigkeit von einem Wert des analogen Signals (11) bestimmt wird, wobei die Ansteuerungsfrequenz in einem zweiten Frequenzband größer als 1 MHz ist;
• Ausgeben eines Lichtsignals (20) durch die angesteuerte Übertragungseinheit (12);
• Empfangen eines Lichtsignals (20) durch eine Empfangseinheit (32);
• Messen der Intensität des von der Empfangseinheit (32) empfangenen Lichtsignals (20) mithilfe einer Intensitätsmesseinheit (34) und Generieren eines analogen Ausgangssignals (11) im ersten Frequenzband, wobei die Empfangseinheit (32) eine Latenzzeit von weniger als 1 µs aufweist.
**dadurch gekennzeichnet, dass** das Lichtsignal (20) durch Ansteuern der Übertragungseinheit (12) generiert wird, wenn die Intensität des von der Übertragungseinheit ausgegebenen Lichts Null oder abnehmend ist.

## Claims

1. A light transmission device (10) for transmitting an analog signal (11) in a first frequency band below 20 kHz, comprising:
• a transmission unit (12) configured to transmit a light signal (20) in the visible spectrum;
• an excitation unit (14) configured to generate an excitation (13), the excitation (13) being configured to excite the transmission unit (12); and
wherein the frequency or duration of the excitation (13) is determined as a function of a value of the analog signal (11), the excitation frequency being within a second frequency band higher than 1 MHz,
**characterized in that** the excitation unit (14) is configured to excite the transmission unit (12) when said transmission unit (12) is in a falling transient state or in a steady state in which the light intensity is zero.

2. The light transmission device (10) according to claim 1, wherein the transmission unit (12) comprises a phosphorescent light-emitting diode.

3. The light transmission device (10) according to any one of claims 1 and 2,
wherein the light transmission device (10) comprises a first communication unit (16) configured to communicate with a remote second communication unit (36) according to an electromagnetic communication protocol.

4. A light reception device (30) configured to generate an analog output signal (11), comprising:
• a reception unit (32) having a latency time of less than 1 µs, configured to receive a light signal (20) emitted by a light transmission unit (12);
• an intensity measurement unit (34) configured to measure an intensity of the light signal (20) received by the reception unit (32) and to generate an analog output signal (11) in a first frequency band below 20 kHz,
**characterized in that** the light signal (20) is generated by exciting the transmission unit (12) when the intensity of the light emitted by the transmission unit is zero or decreasing, the reception unit (32) comprising a photovoltaic cell for receiving the light signal.

5. The light reception device (30) according to claim 4, wherein the photovoltaic cell is an organic photovoltaic cell.

6. The light reception device (30) according to any one of claims 4 and 5, wherein the reception device (30) comprises a second communication unit (36) configured to communicate with a remote first communication unit (16) according to an electromagnetic communication protocol.

7. A system for transmitting an analog signal (11) comprising:
∘ a light transmission device (10) for transmitting an analog signal (11) in a first frequency band below 20 kHz, comprising:
• a transmission unit (12) configured to transmit a light signal (20) in the visible spectrum,
• an excitation unit (14) configured to excite the transmission unit (12);
∘ wherein frequency or duration of the excitation is determined as a function of a value of the analog signal (11), the excitation frequency being within a second frequency band higher than 1 MHz, and
- a light reception device (30) configured to generate an analog output signal (11), comprising:
• a reception unit (32) having a latency time of less than 1 µs, configured to receive the light signal (20) emitted by the light transmission device (10);
• an intensity measurement unit (34) configured to measure an intensity of the light signal (20) received by the reception unit (32) and to generate an analog output signal (11) in the first frequency band,
**characterized in that** the light signal (20) is generated by exciting the transmission unit (12) when the intensity of the light emitted by the transmission unit is zero or decreasing.

8. A method for transmitting an analog signal (11) in a first frequency band below 20 kHz, comprising the following steps:
• exciting a transmission unit (12) configured to transmit a light signal (20) in the visible spectrum, wherein the frequency or duration of the excitation is determined as a function of a value of the analog signal (11), the excitation frequency being within a second frequency band higher than 1 MHz;
• emitting a light signal (20) by the excited transmission unit (12);
• receiving a light signal (20) by a reception unit (32);
• measuring the intensity of the light signal (20) received by the reception unit (32) using an intensity measurement unit (34) and generating an analog output signal (11) in the first frequency band, wherein the reception unit (32) has a latency time of less than 1 µs,
**characterized in that** the light signal (20) is generated by exciting the transmission unit (12) when the intensity of the light emitted by the transmission unit is zero or decreasing.
